# EUROPEAN PATENT APPLICATION

(11) **EP 4 741 239 A1**
(43) Date of publication of application: **13.05.2026**
(21) Application number: 25213530.6
(22) Date of filing: 05.11.2025
(51) Int. Cl.: B60T 17/00, B01D 53/26, F15B 21/048

(54) **PNEUMATIC SYSTEM**

(30) Priority: 06.11.2024 GB 202416369
(71) Applicant: AGCO International GmbH, 8212 Neuhausen am Rheinfall (CH)
(72) Inventor: FRANK, Georg, 87616 Marktoberdorf (DE)
(74) Representative: AGCO Intellectual Property Department

(57) **Abstract**

A pneumatic system has first and second electrically operated air dryers, each couplable to a compressor through a selection valve. The selection valve is a pneumatically controlled valve, and a fluid pressure at an output port of a governor valve of one of the electrically operated air dryers is used to control switching of the selection valve.

## Description

### FIELD

Embodiments of the present disclosure relate generally to pneumatic systems, such as pneumatic supply systems, especially for industrial or utility vehicles, such as tractors, other agricultural vehicles, construction vehicles and others.

### BACKGROUND

Vehicle air supply systems require air dryers to discharge humidity from the air before supplying it to consumers (i.e., on-board or external equipment requiring a pneumatic supply such as pneumatic actuators, pneumatic cylinders, pneumatic motors and reservoirs or accumulators for storing a pressurized air supply for such equipment). Damp air can cause corrosion in pipes and other components on the vehicle, so before supplying air to consumers (for example, for the vehicle's brake system) the air is usually guided through a dryer. When the air is passing through the dryer to dry the air, this mode of operation is known as a drying or loading mode.

Due to the restricted load capacity of dryers, a second operation mode, known as a regeneration mode, is required which involves passing air through the reservoir in an opposite direction and discharging it to the atmosphere to remove water deposited in, or on, the drying material of the dryer.

It is known to use double chamber dryers which comprise two separate dryer reservoirs, so that when one chamber is operative in drying the air from the compressor in a loading mode, the other chamber can be operated in a regeneration mode. The shift between the two modes of each drying chamber is time-controlled, so that the dryer may continually be used to dry air.

Furthermore, Electrically Operated Air Dryers (EODs) are also known. These dryers only require one dryer portion and the shift between the two modes of operation, that is the switch between the regeneration mode and the loading mode, is controlled electronically. This may be time-controlled by a control unit. For example, the two modes can be controlled by measuring the volume of air passing through the dryer by measuring the compressor time or measuring the pressure rise in the reservoirs (and knowing that a certain pressure rise requires a predetermined air volume). A percentage of the volume of air in the air supply system can be guided back for the regeneration.

Known pneumatic supply systems also have a compressor idle mode, used when the compressor is not required to supply compressed air through the dryer. The idle mode conserves energy and hence reduces power consumption. The idle mode is used when the air pressure in the system is within the desired range. Moisture sensing may also be used.

It is known to use two EODs connected in parallel in a pneumatic supply system so that the EODs can be used alternately, with one operating in a loading mode and the other in a regenerating or other non-loading mode. The EODs are typically connected with a single compressor through a pneumatically controlled selection valve. Actuation of the selection valve is regulated electronically using a solenoid actuated valve to selectively connect a pneumatic pilot port of the selection valve to a source of fluid pressure to move the valve and switch between the EODs. However, this adds complication to control of the overall system.

### BRIEF SUMMARY

The scope of this disclosure is defined by the claims.

According to examples in accordance with this disclosure, there is provided a pneumatic system, comprising:
a compressor;
a selection valve;
a first and a second electrically operated air dryer (EOD), each EOD having an input fluidly couplable to the compressor through the selection valve and an output configured to be fluidly connected to at least one consumer;
each EOD comprising:
   a dryer unit;
   a discharge valve for selectively coupling the EOD input to atmosphere; and
   a governor valve having an output port fluidly connected to a control pilot port of the discharge valve, the governor valve being selectively operable in an EOD inlet venting configuration to fluidly connect the output port to the EOD output so as to actuate the discharge valve to fluidly connect the EOD input to atmosphere;
   wherein the selection valve is a pneumatically controlled valve having a pilot port for receiving a control pressure signal and is operative to connect either the first EOD or the second EOD to the compressor, the selection valve being biased to connect one of the first and second EODs to the compressor and movable against the bias in response to a control pressure signal at the selection valve pilot port to connect the other of the first and second EODs to the compressor, and wherein control pressure signal is derived from the fluid pressure at the output port of the governor valve of said one of the first and second EODs when the governor valve is operative in said EOD inlet venting configuration.

This system has two air dryers, supplied with compressed air one at a time. This for example enables one air dryer to be regenerated while the other is operating in a loading mode. The switching between the two air dryers is achieved using a pneumatically controlled valve without the need for electronic control of the selection valve or of a valve to provide a pneumatic signal to the selection valve.

In embodiments, the output port of the governor valve of said one of the first and second EODs is fluidly connected directly to the selection valve pilot port, the fluid pressure at the output port when the governor valve is operative in said EOD inlet venting configuration comprising the control pressure signal.

In embodiments, the system comprises a further pneumatically piloted valve, the output port of the governor valve of said one of the first and second EODs is fluidly connected to a pilot port of the further pneumatically piloted valve, such that when the governor valve is operative in said EOD inlet venting configuration, the further valve is actuated to connect a source of fluid pressure to the selection valve pilot port to constitute the control pressure signal.

In embodiments, each EOD also has a one-way output valve between an output to the dryer unit and the output of the EOD, the one-way output valve configured to allow air to pass only in the first direction from the dryer unit to the EOD output, and a regeneration valve connected in parallel to the one-way output valve between the dryer unit output and the EOD output and selectively operable for bypassing the one-way output valve to allow air to flow in a second direction opposite to the first from the EOD output through the dryer unit.

In embodiments, each EOD has (i) a loading mode in which air from the compressor is driven through the EOD to the at least one consumer and (ii) a non-loading mode in which the EOD inlet is fluidly connected to the atmosphere by the discharge valve, and the compressor has an idle mode which is triggered by a pressure to an idle control port of the compressor.

The pneumatic system may have a pneumatic control valve having an output fluidly connected to the idle control port, for placing the compressor into the idle mode when both the first and second EODs are in the non-loading mode. The pneumatic control valve may be a pneumatic logic AND valve having two inlet ports, each fluidly connected to the governor valve output port of a respective one of the first and second EODs, and an output port fluidly connected to the compressor idle control port. This provides a purely pneumatic control for switching between EODs and idling of the compressor when both EODs are operative in a non-loading mode.

Alternatively, the pneumatic system may comprise a compressor mode selection valve for selectively providing a system pressure to the idle control port of the compressor, wherein the compressor mode selection valve is electrically actuated by a control unit. In this case, the system pressure may comprise the pressure at the output port of a governor valve of one of the first and second EODs or the pressure at the at least one consumer.

The outputs of the first and second EODs may be fluidly connected upstream of the consumers and there may be a multi-circuit protection valve system between the connected EOD outputs and the consumers.

This disclosure also provides a vehicle comprising: the pneumatic system as define above; and the at least one consumer supplied by the pneumatic system.

The vehicle may be any vehicle having a pneumatic system for supplying consumers (i.e., on-board or external equipment) with pneumatic power. The vehicle may be an agricultural vehicle, such as a tractor, a construction vehicle such as a digger or excavator or other type of commercial or utility vehicle requiring a pneumatic air supply system.

By way of example, the at least one consumer may comprise at least one selected from the following list:
rear service brake;
front service brake;
park brake;
trailer brake.
tire pressure control system;
cab air supply;
dust discharge system.

These are all types of equipment using pneumatic power for different purposes.

The vehicle may comprise a vehicle, or a combination of a towing vehicle and a towed implement.

### BRIEF DESCRIPTION OF THE DRAWINGS

One or more embodiments of this disclosure will now be described, by way of example only, with reference to the accompanying drawings, in which:
FIG. 1 shows a tractor towing an agricultural implement, as one example of a vehicle that can make use of the pneumatic system of this disclosure;
FIG. 2 shows a circuit diagram of part of a pneumatic supply system for the vehicle of FIG. 1 which includes a single EOD;
FIG. 3 shows the EOD of FIG. 2 operating in a loading mode;
FIG. 4 shows the EOD of FIG. 2 operating in a non-loading (idle) mode;
FIG. 5 shows the EOD of FIG. 2 in an overpressure protection mode;
FIG. 6 shows the EOD of FIG. 2 operating in a regeneration mode;
FIG. 7 illustrates a first example of a pneumatic system of this disclosure.
FIG. 8 illustrates a second example of a pneumatic system of this disclosure.
FIG. 9 illustrates a third example of a pneumatic system of this disclosure; and
FIG. 10 illustrates a fourth example of a pneumatic system of this disclosure.

### DETAILED DESCRIPTION

The subject matter of this disclosure will be described with reference to the Figures.

It should be understood that the detailed description and specific examples, while indicating exemplary embodiments of the apparatus, systems and methods, are intended for purposes of illustration only and are not intended to limit the scope of the disclosure. These and other features, aspects, and advantages of the apparatus, systems and methods of the present disclosure will become better understood from the following description, appended claims, and accompanying drawings. It should be understood that the Figures are merely schematic and are not drawn to scale. It should also be understood that the same reference numerals are used throughout the Figures to indicate the same or similar parts.

This disclosure provides a pneumatic system having first and second EODs that are alternately couplable to a compressor through a selection valve. The selection valve is a pneumatically controlled valve, and a control pressure within the pneumatic system is provided to the selection valve to control switching of the selection valve.

Before describing the concept of this disclosure, examples of the type of vehicle in which the pneumatic system may be used will be discussed, and the known operation of an EOD will be explained.

The pneumatic system of this disclosure may be applied to a vehicle alone (having pneumatically powered on-board equipment) or to a vehicle and an associated implement which may be towed or carried by the vehicle. In the latter case, part of the pneumatic system may be in the main vehicle and part of the pneumatic system may be in the associated implement.

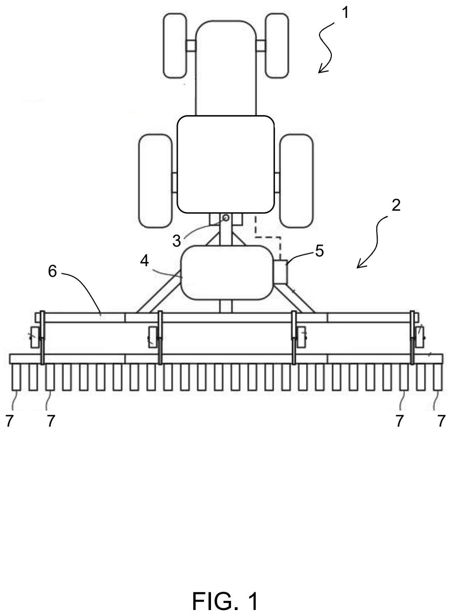

FIG. 1 shows an agricultural tractor 1, as one example of a vehicle that can make use of the pneumatic supply system of this disclosure. The tractor 1 is shown towing an agricultural implement in the form of a planter 2, as one example of an implement associated with a vehicle. The tractor is coupled to the planter by a hitch 3. The planter comprises a seed tank 4 and a control system 5 which regulates delivery of seed to a number of row units 7 mounted to a tool bar 6.

The pneumatic supply system of this disclosure is not limited to use with tractors or other agricultural vehicles or machines (such as combine harvesters, sprayers and the like) but can be adapted for use with any industrial or utility vehicle requiring a pneumatic air supply, including construction vehicles, trucks, lorries and others. Indeed, the pneumatic system of this disclosure can also be adapted for use in any pneumatic system using two EODs, whether on a vehicle or not.

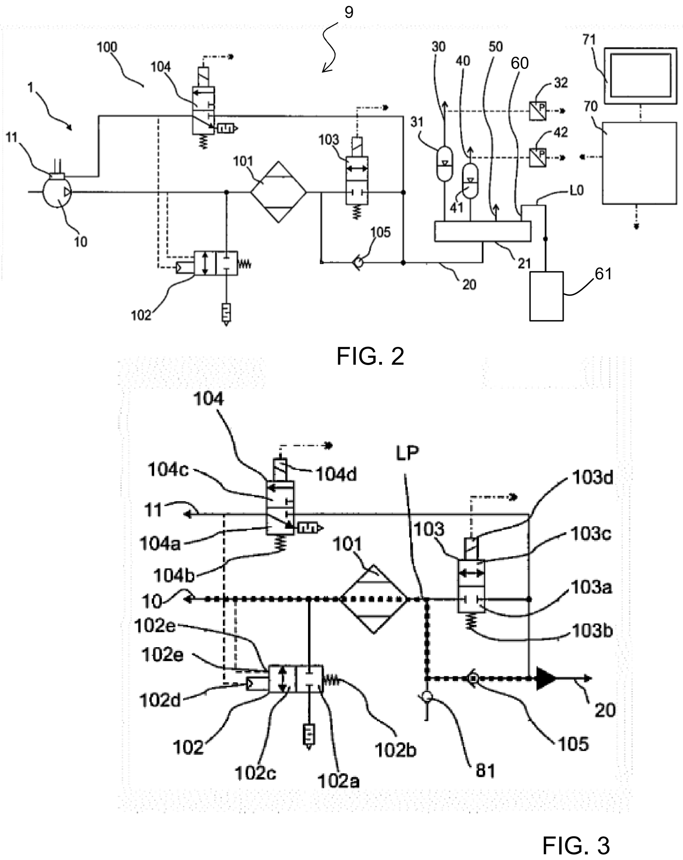

FIG. 2 shows a circuit diagram of a known pneumatic supply system 9 having an EOD 100, for example for mounting on a vehicle 1 such as the tractor 1.

A compressor 10 supplies air to components on the vehicle via the EOD 100. The EOD is connected to various consumers (illustrated schematically at 30, 40, 50, 60) via a consumer branch 20 connected to an output of the EOD. In this example, the consumers 30, 40 are primary consumers and the consumers 50 and 60 are secondary consumers. Reservoirs 31, 41 are assigned to the primary consumers 30, 40 and are equipped with pressure sensors 32, 42 to measure the pressure of the compressed air in the consumer branches. Consumers 50 or 60 may also be equipped with respective reservoirs and/or pressure sensors. Generally, the system will try to maintain the reservoirs at a defined pressure level, for example in the range of 8.5 bar (850 kPa) to 12.5 bar (1259 kPa), to ensure that they can deliver the required air pressure when required.

Primary consumers are those whose operation is prioritized over other consumers that are regarded as secondary. Primary consumers may be safety critical. By way of example, in tractors or trucks, primary consumers 30 and 40 may be parallel brake circuits for a dual-circuit service brake. Secondary consumers 50, 60 may be a parking brake, an air suspension of the cab and/or wheels, or the TPCS 61, for example.

The consumer branch 20 is connected with the various consumers through a multi-circuit protection valve system 21. The multi-circuit protection valve system can take various forms as are well known in the art and may be operative to balance the pressure required to be supplied to the primary set of consumers 30, 40 and the secondary consumers 50, 60 and/or to cut the supply to any consumer should a consumer develop a leak. In this way, the integrity of the supply to the remaining consumers is maintained. Furthermore, the multi-circuit protection valve system 21 may be configured to ensure that the supply to the primary consumers is prioritized over the supply to secondary consumers, such as a tire pressure control system, TPCS, 61. Examples of multi-circuit protection valve systems are disclosed in GB1387892 to Robert Bosch GmbH and GB1563144A to WABCO Westinghouse GmbH.

Compressor 10 is equipped with idler means 11 to provide an idle mode in which the air flow is reduced to a rate of, for example, 15% of the maximum air delivery, which maximum air delivery may be in the region of 400 to 1000 liters per minute in a non-limiting example. Alternatively, this efficiency idle function may be provided by an OFF/ON clutch cutting mechanical drive of compressor 10. Furthermore, the compressor 10 may be electrically driven and the electric supply may be switched off by idler means 11.

The electrically operated air dryer (EOD) 100 comprises a dryer unit 101 comprising a cartridge filled with drying granules (desiccant), a discharge valve 102, a regeneration valve 103, a governor valve 104, and a one-way output check valve 105. The system has an electronic control unit 70, which may be a computer or CPU. For clarity reasons, the electric connections of valves 102, 103 and 104 to the control unit 70 are only indicated by the dashed arrows. The control unit is coupled to a display 71. The regeneration valve 103 is connected in parallel to the output check valve 105 between the output of the dryer unit 101 and the consumer branch/output of the EOD 100.

The granules in the cartridge extract water from the air passing through it in a first direction from the compressor to the consumers.

With reference to FIGs. 3 to 6, standard operating modes of the pneumatic system are now explained:
FIG. 3 shows a loading or drying mode.

When air is required to be supplied to the consumer branch 20, air from compressor 10 flows to the consumer branch 20 in a first direction through dryer unit 101 and check valve 105 as shown by the dotted path LP. During loading, discharge valve 102 is in its closed position 102a biased by spring 102b, as shown in FIG. 3. The regeneration control valve 103 and governor valve 104 are also in their closed positions 103a and 104a biased by springs 103b and 104b. Air flow in an opposite direction, that is from the consumer branch 20 to compressor 10, is prohibited by check valve 105 and the closed regeneration valve 103.

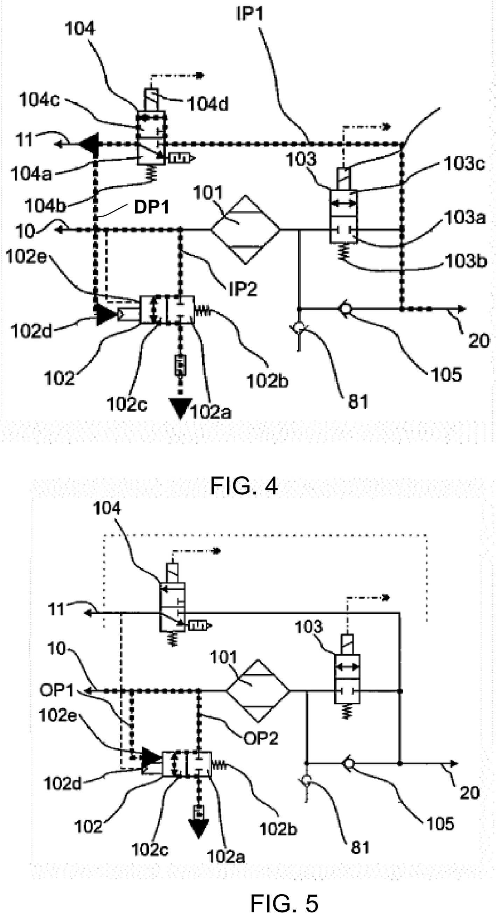

FIG. 4 shows a non-loading, idle mode. This will also be referred to as a holding mode.

If the consumers are provided with sufficient air pressure, the pressure in the reservoirs 31, 42 is about 8.5 bar (850 kPa) to 12.5 bar (1259 kPa) in this non-limiting example. This pressure is measured by sensors 32, 42 in reservoirs 31, 41. If this pressure is exceeded because compressor 10 is still working, the control unit 70 switches the governor valve 104 from a first (closed) position 104a (biased by spring 104b) to a second (open) position 104c by energizing solenoid 104d to guide air along path IP1 from the consumer branch 20 through an output port of the governor valve to the compressor idler 11. The output port of the governor valve 104 is also connected to a pilot port 102d of the discharge valve 102 via path DP1 so that when the governor valve is in the second position 104c, the discharge valve 102 is moved to its open position 102c to connect the EOD inlet, and hence the compressor output, to the atmosphere. Thereby the remaining air flow from the compressor (which may be approximately 15% of the maximum air flow of the compressor) is discharged to the atmosphere with minimum resistance via discharge valve 102 along path IP2. The second, open position 104c of the governor valve will also be referred to as an EOD inlet venting configuration as it is the position the valve 104 is in when it actuates the discharge valve 102 to vent the EOD input to atmosphere.

The compressor idler 11 keeps the compressor 10 in this energy saving mode as long as pressure is applied to the idle control port. For normal operation, the compressor idler 11 must be connected to the atmosphere and this is done through governor valve 104 when in first or closed position 104a.

FIG. 5 shows an overpressure protection mode.

If the pressure in the EOD inlet rises to a level above a permitted operating pressure, discharge valve 102 is opened via path OP1 so that the connection of the EOD inlet and compressor 10 to the atmosphere is opened (indicated by path OP2). This function is a safety function when the electronic control fails, or a blockage occurs which would also result in an incorrect pressure detection at pressure sensors 32,42. In a non-limiting example, the discharge valve 102 may be arranged to connect the EOD inlet to atmosphere when the pressure in the EOD inlet rises to around 19 bar (1900 kPa).

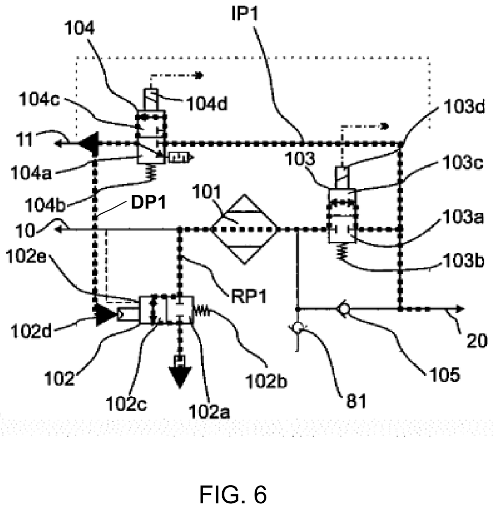

FIG. 6 shows a non-loading, regeneration mode.

The granules in the cartridge of dryer unit 101 can be regenerated by passing a purgative air flow through the cartridge in the reverse direction. Regeneration through the cartridge of dryer unit 101 may be achieved by using air from consumer reservoirs 31, 41 or any other reservoir connectable in a similar manner. For example, the EOD 100 may be provided with its own regeneration reservoir. Governor valve 104 is moved to the EOD inlet venting configuration (second position 104c) first so that the compressor 10 is brought into the idle mode (as explained above for the idle mode) and air flows along path IP1. In addition, regeneration valve 103 is moved from its closed position 103a (biased by spring 103b) to the open position 103c by energizing solenoid 103d so that air from the consumer branch 20 (or other source of air used for regeneration) can by-pass the check valve 105 and enter the cartridge of dryer unit 101 along path RP1 to pass through the dryer unit in the opposite direction to the first direction. As discharge valve 102 is already opened to position 102c via path IP1, DP1 and port 102d, the air regenerating the dryer unit cartridge 101 and any air coming from the compressor 10 in the idle mode is discharged to the atmosphere.

This disclosure relates to pneumatic systems with two EODs alternately connectable between a compressor and the consumers. This enables one EOD to supply dry air while the other is regenerating or idling. However, this requires control of a selection valve to determine which EOD is connected to the compressor. This complicates the control of the compressor.

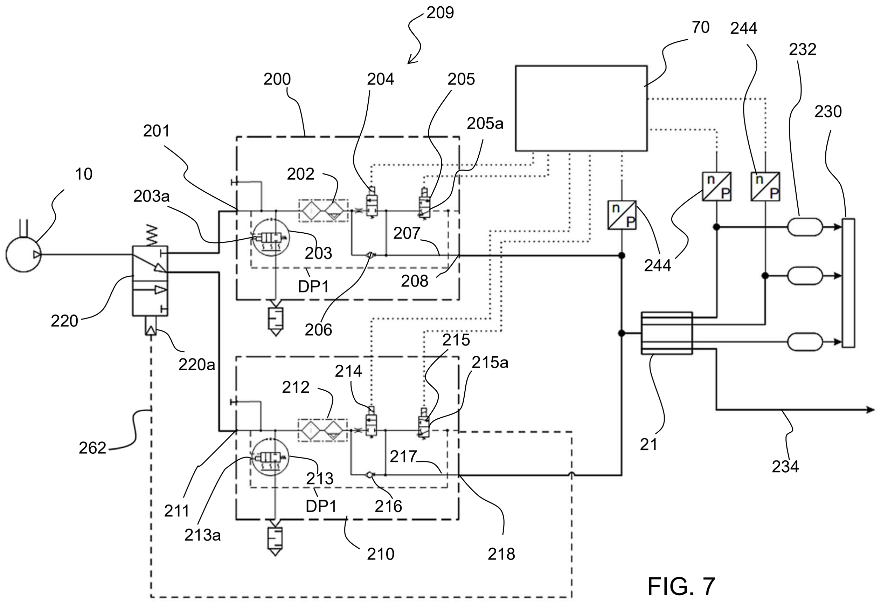

This disclosure provides a pneumatic system, a first example 209 of which is shown in FIG. 7.

The pneumatic system 209 comprises a compressor 10, a first EOD 200 and a second EOD 210, each having an input 201, 211 which can be alternatively fluidly connected to the compressor 10 through a selection valve 220. The selection valve 220 couples the input of either the first EOD or second EOD to the compressor output.

The EODs each have an output 208, 218 forming part of a consumer branch 207, 217. The consumer branches 207, 217 and outputs 208, 218 of the two EODs are fluidly connected to each other and are connected to the consumers through a multi-circuit protection valve system 21 similar to that described above in relation to the pneumatic system 9 of FIG. 2.

In one example, each EOD has a structure and operation similar to that explained above for a single EOD system with reference to FIGs. 2 to 6.

Thus, as shown for the first EOD 200, there is a dryer unit 202 comprising a cartridge filled with drying granules, a discharge valve 203, a regeneration valve 204, a governor valve 205, and an output valve (check valve) 206. The discharge valve 203 is for selectively coupling an input 201 to the first EOD 200 to the atmosphere and is thus between an input side of the dryer unit 202 and a vent to the atmosphere.

The one-way output check valve 206 is located between an output to the dryer unit 202 and a consumer branch 207 leading to an output 208 of the EOD which is fluidly connected to the one or more consumers 230, 234. In addition, the output side of the dryer unit 202 is fluidly connectable to the consumer branch 207 and EOD output 208 through the regeneration valve 204 in parallel to the output check valve 206. The regeneration valve 204 is thus capable of selectively coupling the consumer branch 207 and the EOD output 208 to the output of the dryer unit to allow a flow through the dryer unit in a reverse direction for regeneration. The governor valve 205 has an input port fluidly connected to the consumer branch 207 and the EOD output 208 and an output port 205a fluidly connected to a pilot control port 203a of the discharge valve 203, as indicated by the dashed line DP1.

The electric connections of valves 204 and 205 to the control unit 70 are indicated by dashed lines and may be wired or wireless.

The second EOD 210 is similarly constructed having a dryer unit 212 comprising a cartridge filled with drying granules, a discharge valve 213, a regeneration valve 214, a governor valve 215, and an output valve (check valve) 216. The discharge valve 213 is for selectively coupling an input 211 to the second EOD to the atmosphere and is thus between an input side of the dryer unit 212 and a vent to the atmosphere. A consumer branch 217 of the second EOD leads to an output 218 of the second EOD and is fluidly connected to the consumer branch 207 of the first EOD upstream of the consumer multi-circuit protection valve system 21. The second EOD 210 is constructed and operated in a similar manner to the first EOD 200 as described above, to which the reader should refer.

In each of the first and second EODs 200, 210, the respective discharge valve 203, 213, regeneration valve 204, 214, governor valve 205, 215, and one-way output check valve 206, 216 correspond to and perform similar functions to the discharge valve 102, regeneration valve 103, governor valve 104, and output check valve 105 in the known single EOD system described above in relation to FIGs. 2 to 6.

The multi-circuit protection valve system 21 supplies a set of primary consumers 230 via reservoirs 232 and secondary consumers 234. FIG. 7 also shows pressure sensors 244 for providing pressure feedback to the control unit 70. A pressure sensor 244 may be associated with each of the primary consumers upstream of the multi-circuit protection valve 21. In addition, or alternatively, a pressure sensor 244 for detecting pressure between the outlets of the EODs and the multi-circuit protection valve 21 (i.e., upstream of the multi-circuit protection valve 21) can be used to provide a control input. A single pressure sensor 244 could be used but multiple sensors detecting the same pressure provide for redundancy in case one should fail.

As explained above, each EOD 200, 210 can be operated in a loading mode in which the compressor is driven in a drive mode and compressed air is driven through the dryer unit to the one or more consumers and non-loading modes, which include a holding mode and a regeneration mode in each of which the input 201, 211 to the EOD is connected to atmosphere through the discharge valve 203, 213..

The compressor 10 has an energy saving idle mode which is used when the system pressures are such that operation of the compressor is not needed. In the idle mode, the compressor 10 is switched to an idle state. The compressor may be turned off in the idle state, but it may remain partially actuated delivering a lower pressure and air flow than when being driven to provide air to the consumers through one of the EODs 200, 210.

To the extent described above, the implementation of two EODs is known.

In accordance with this disclosure, the selection valve 220 is a pneumatically controlled valve, wherein a control pressure within the pneumatic system is provided to a pilot port 220a of the selection valve to control switching of the selection valve.

In an example according to FIG. 7, the selection valve pilot port 220a is fluidly connected to the output port 205a, 215a of the governor valve 205, 215 of one of the EODs 200, 210. In the embodiment shown, the pilot port 220a of the selection valve 220 is fluidly connected to the output port 215a of the governor valve 215 of the second EOD 210 by line 262. The selection valve 220 is biased by a spring to fluidly connect the output of the compressor 10 to the second EOD 210 in a default setting as shown in FIG. 7. When the second EOD 210 is operated in a non-loading mode, for example because it requires regeneration, the governor valve 215 of the second EOD 210 is moved to the EOD inlet venting configuration which, in addition to actuating the discharge valve 213, will forward a fluid pressure (a control pressure signal) to the pilot port 220a of the selection valve 220 moving the valve against the spring bias so that the first EOD 200 is fluidly connected to the compressor output. The first EOD 200 can then be operated in a loading mode to dry air forwarded from the compressor 10 to the consumers. The second EOD can be operated in a holding mode with the regeneration valve 213 closed or a regeneration mode by also opening the regeneration valve 213.

If the second EOD 210 is subsequently to be operated in a loading mode, for example when regeneration of the first EOD 200 is required, the governor valve 215 of the second EOD 210 is moved to the first (closed) position (corresponding to position 104a of the prior art system described above in relation to FIGs. 2 to 6) so that its output port 215a and the fluid line 262 to the selection valve pilot port 220a is vented to atmosphere. The selection valve 220 will then be biased by its spring to the default position so that the second EOD 210 is again fluidly connected to the output of the compressor. When both EODs 200, 210 are operated in a non-loading mode, the control pressure signal from the governor valve 215 of the second EOD 210 will hold the selection valve 220 so that the first EOD 200 is fluidly connected to the compressor 10 and any output from the compressor will be vented to atmosphere through the discharge valve 203 of the first EOD.

It will be appreciated that the above arrangement could be reversed, with the output port 205a of the governor valve 205 of the first EOD 200 fluidly connected to the pilot port 220a of the selection valve 220 and the selection valve biased by its spring to connect the first EOD to the compressor output in a default position.

The selection valve 220 is a 3/2 way valve (three ports/two positions), which is pneumatically pilot controlled. In the prior art, a solenoid valve is controlled by a controller to connect the selection valve pilot port to a source of pressurized air to switch the dryers. The arrangement of FIG. 7 uses a fluid pressure signal from one of the air dryers to pilot control the selection valve 220. Thus, when the air dryer is in non-loading mode actuating its governor valve, the selection valve is also actuated. If both dryers are placed in non-loading mode, the selection valve will be actuated (and the compressor is then placed in idle mode as discussed below). The reduced output from the compressor will then be directed to atmosphere though the discharge valve of the currently connected air dryer.

Rather than using the fluid pressure at the outlet port 205a, 215a of the governor valve directly as the control pressure signal to actuate the selection valve 220, the fluid pressure at the outlet port 205a, 215a of the governor valve 205, 215 could be used indirectly to generate the control pressure signal. For example, the fluid pressure at the outlet port 205a, 215a of the governor valve 205, 215 could be directed to a pilot port of a further pneumatically controlled valve (not shown) which is arranged to connect the pilot port 220a of the selection valve 220 to a fluid pressure source which acts as the control pressure signal. This also provides for a purely pneumatic control of the selection valve, albeit that a further valve is required.

The basic operation of the system involves drying air with one air dryer while the other is regenerating or in a waiting state. The regeneration can be adapted to the actual moisture content of the air dryer cartridge. Once one cartridge has reached a critical loading state, the system switches to the other EOD, and the one cartridge is regenerated. A volume flow model can be used to determine how much air has passed through a cartridge since regeneration. The amount of regeneration air can be calculated, and the cartridges can be regenerated one after the other.

In the example shown, the selection valve couples the compressor 10 to the second EOD 210 in the absence of a sufficient pressure at the pilot port of the selection valve. The pilot port couples to the governor valve output 215a of the second EOD 210 so that when the second EOD is in the non-loading mode, the selection valve 220 is actuated and the compressor then connects to the first EOD. This is also the connection if both EODs are in the non-loading mode.

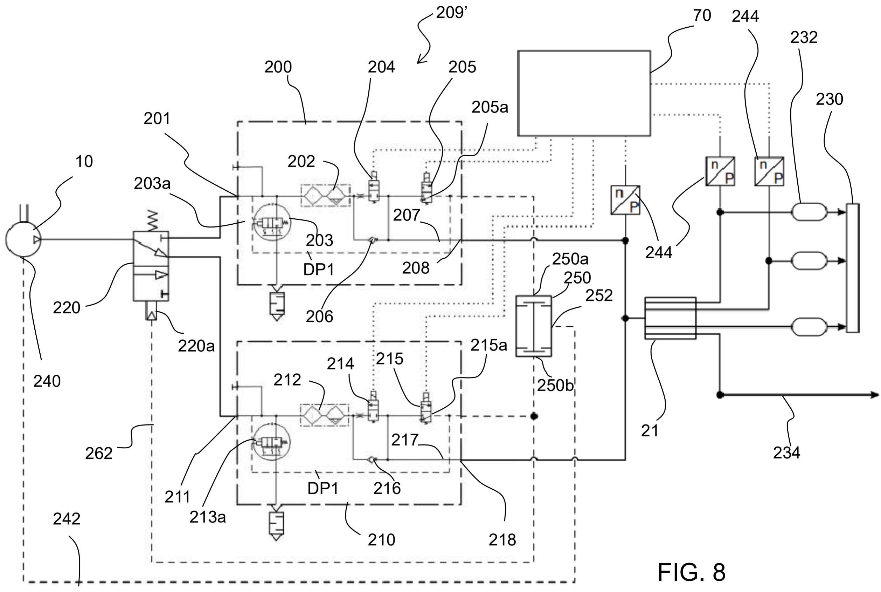

In the example of FIG. 8, the pneumatic system 209' is substantially identical to the system 209 of the example shown in FIG. 7 and as described above, except for the arrangement for controlling the compressor idler, which will now be described. In particular, FIG. 8 shows a modification that uses the same control of the selection valve 220 as in FIG. 7, but additionally the idle mode of the compressor 10 is triggered by a pressure to an idle control port 240. A pressure control line 242 is fluidly connected to the idle control port 240.

There are many compressor designs with an idle mode. For example, most two-cylinder compressors use the pressure in an energy saving pipe to open a valve between the two cylinders. Air is no longer compressed and output, but is instead only cycled between the two cylinders.

In one-cylinder compressors, the pressure in an energy saving pipe may be used to open a valve, so that air is no longer compressed but is exhausted to atmosphere.

Another possibility is a separate valve between a cylinder and the suction port. Pressure in an energy saving pipe opens this valve and air in the cylinder will flow back to suction port.

For generating the compressor idle pressure signal supplied along the pressure control line 242 to the idle control input port 240 of the compressor, a pneumatic logic circuit is used. In the embodiment shown, the pneumatic logic circuit comprises a pneumatic AND logic control valve 250 having an output 252 fluidly connected to the idle control input port 240 by the pressure control line 242. The control valve 250 has two inputs 250a, 250b. The output port 205a, 215a of the governor valve 205, 215 of each of the first and second EODs 200, 210 is fluidly connected to a respective one of the inputs 250a, 250b of the control valve 250. Thus, each input pressure is high when the respective governor valve 205, 215 is in its second, EOD inlet venting configuration to actuate its associated discharge valve 203, 213 during a non-loading mode of operation of the respective EOD and is low when the respective EOD is operating in a loading mode and the governor valve 205, 215 is in its first position.

The control valve 250 is designed to deliver a pressure which places the compressor into the energy saving idle mode only when both the first and second EODs are operating in a non-loading mode, namely when both inputs are high.

The idle mode of the compressor is thus used when both air dryers are in a non-loading mode and no compressed air is being provided to the consumers. The use of pneumatic logic control simplifies the control system and avoids the need for an additional electrical control signal for the compressor mode control. The use of pneumatic logic control is also less prone to error and so provides for increased safety levels.

The control valve 250 functions as a pneumatic AND logic valve. The valve will only produce an output fluid pressure signal at the output 252 for transmission to the compressor idle control port 240 when there is a fluid pressure at both inputs 250a, 250b to the control valve (i.e., when both governor valves 205, 215 are in the second, EOD inlet venting configuration). The control valve 250 forwards the lowest of the fluid pressures at the inputs 250a, 250b to the output 252. However, when both governor valves 205, 215 are in the EOD inlet venting configuration, they will forward the same pressure to the two control valve inlets 250a, 250b as they are fluidly connected, and this pressure will be forwarded to the output 252 and hence to the compressor idle control port 240. When a governor valve 205, 215 is in its first position, its output port 205a, 215a is connected to atmosphere so that no fluid pressure is retained in the lines to the respective input 250a, 250b of the control valve 250 or the pilot port 203a, 213a, of the respective discharge valve 203. Since control valve 250 forwards the lowest fluid pressure present at either of the inlets 250a, 250b to the output 252, when at least one of the governor valves 205, 215 is in the closed position so that its output port 205a, 215a is vented to atmosphere, the output 252 of the control valve 250 and the control line 242 to the idle control port 240 will also be vented to atmosphere so that the compressor 10 will not be idled.

If either of the pressure sensors 244 (which are connected to the same pressure level and multiple sensors are only provided for a verification check) indicates that the main consumer reservoirs 232 have reached their target operating pressure (e.g., 8.5 bar, 850 kPa to 12.5 bar (1259 kPa)) both governor valves 205, 215 are switched to the open, venting position resulting in idling of the compressor 10. Since the discharge valve 203, 213 of both EODs will be actuated to connect the EOD inputs to atmosphere, any reduced output from the compressor will be vented to atmosphere through the discharge valve of whichever EOD is fluidly connected to the compressor by the selection valve 220.

The pneumatic logic arrangement avoids the compressor being idled by one governor valve alone. The control valve 250, with two fluid pressure inputs 250a, 250b, is used as a purely pneumatic logic solution to idle the compressor only when both governor valves 205, 215 are in the EOD inlet venting configuration. This avoids the need for any internal changes to the EODs. Other pneumatic AND logic valve arrangements could be adopted to forward a pressure signal to idle the compressor only when both governor valves 205, 215 are in the open, venting position. For example, one alternative logic circuit may comprise two pneumatically piloted 2/2 way valves (two ports/two positions) arranged in series between a fluid pressure source and the compressor idle control port 240, with the pilot port of each valve being fluidly connected to the output port 205a, 215a of a respective one of the governor valves 205, 215. When both governor valves are in the EOD inlet venting position, the pilot port of both valves is pressured so that the two valves open to forward a fluid pressure signal to the idle control port 240.

The non-loading modes of operation for each EOD 200, 210 include a holding mode in which the governor valve 205, 215 is in the EOD inlet venting position but the regeneration valve 204, 214 is closed, and a regeneration mode in which both the regeneration valve 204, 214 is also open. When an EOD is being operated in a regeneration mode, air for regeneration may be provided from the consumers and/or from the other EOD if it is being operated in a loading mode. When an EOD 200, 210 is being operated in a holding mode, air pressure is provided at the output port 205a, 215a of the governor valve to open the discharge valve 203, 213, but air is not allowed to flow in the reverse, second direction through the dryer unit 202, 212.

The compressor 10 can be placed in idle mode when both EODs are being operated in a holding mode, or both are being operated in a regeneration mode, or when one is being operated in a holding mode and the other in a regeneration mode. The two EODs may both be operated in a holding mode when the air pressure in the consumers is sufficiently high that no further air need be provided by the compressor but where neither EOD 200, 210 requires regenerating.

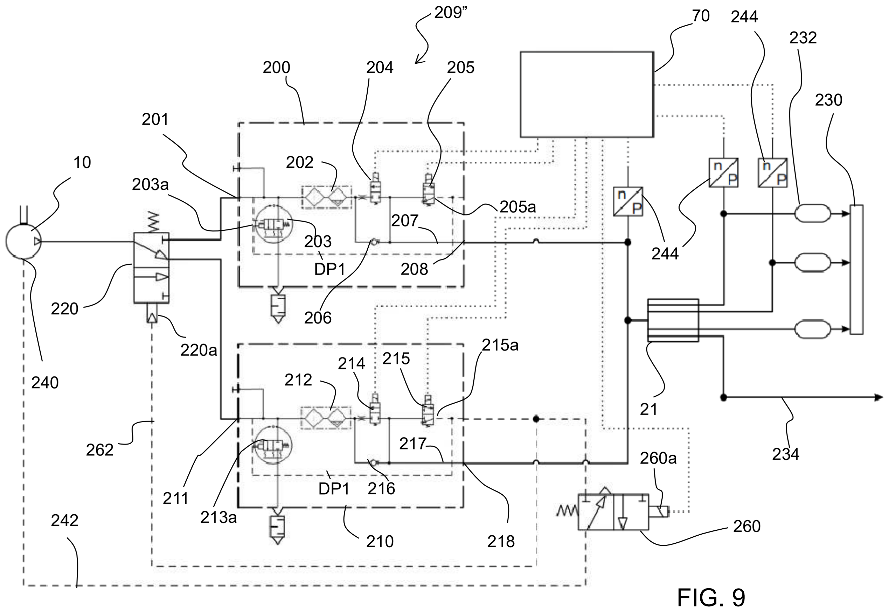

In the example of FIG. 9, the pneumatic system 209" is substantially identical to the system 209 of the example shown in FIG. 7 and as described above, again except for the arrangement for generating an idle control signal for the compressor, which will now be described. In particular, FIG. 9 shows a modification to the control of the compressor in which the pressure at the governor valve output 215a is routed to the idle control port 240 through an electrically controlled valve 260. The valve 260 either delivers the governor valve output pressure to the idle control port 240 or blocks the governor valve output (in the position of the valve 260 shown in FIG. 9). The control of the compressor is thus controlled by selection valve 260. The valve 260 is controlled electrically by the control unit 70 which is electrically connected to a control port 260a of the valve. The valve 260 is only actuated to connect the pressure at the governor valve output 215a to the idle control port 240 when both EODs are operating in a non-loading mode. This approach combines electrical control to route a control pressure to a compressor which has a pneumatically actuated idle mode. This might be used for example to defer idling of the compressor 10 for a short period after the governor valve s moved to the EOD inlet venting configuration to allow the system to purge moisture from the inlet before idling the compressor. The input port of valve 260 could alternatively be connected to the output port 205a of the first EOD 200.

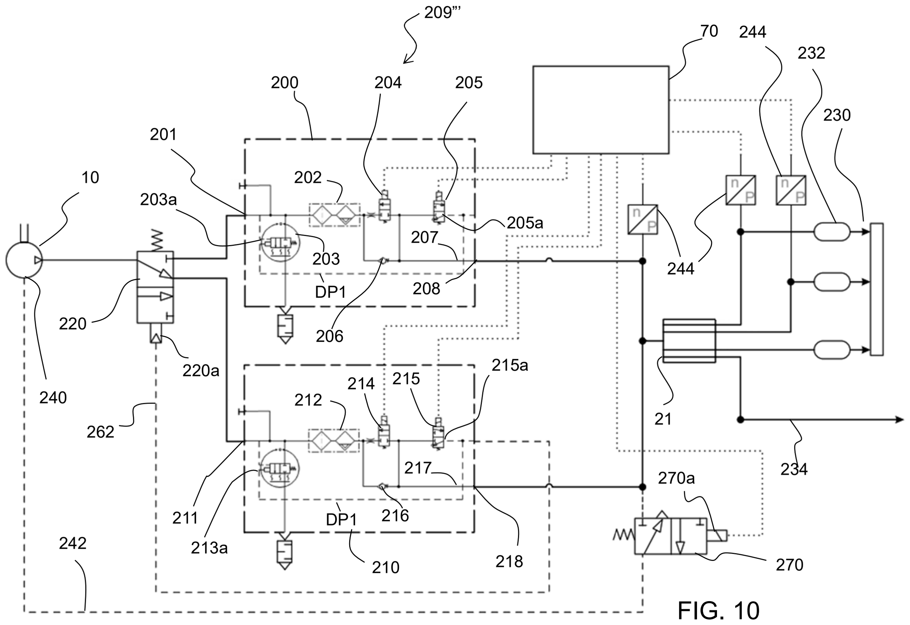

In the example of FIG. 10, the pneumatic system 209‴ is substantially identical to the system 209" of the example shown in FIG. 9 and as described above, again except for the arrangement for controlling the compressor idle mode, which will now be described. In particular, FIG. 10 shows a modification to the control of the compressor idle mode in which a pressure at the outputs of the EODs (i.e. at the consumer side) is used to control the idle mode of the compressor. The consumer pressure is provided to an electrically actuated valve 270 for selectively routing the consumer pressure to the idle control port 240. The idle mode control of the compressor is thus controlled by switching valve 270 using electrical control. The valve 270 is controlled electrically by the control unit 70 which is electrically connected to a control port 270a of the valve. The valve 270 is only actuated to connect the consumer pressure to the idle control port 240 when both EODs are operating in a non-loading mode. This approach again combines electrical control to route a control pressure to a compressor which has a hydraulically actuated idle mode. An advantage of connecting the idle control port 240 with the consumer side, is that a high mass flow of air can be used to switch the compressor. This may be desirable if the compressor is idled by opening a pneumatic clutch in the drive to the compressor.

In any of the embodiments described above in relation to FIGs. 8, 9 or 10, rather than applying a pneumatic pressure to a pilot port 240 of the compressor, the compressor could be idled by using the idle pressure control signal to acuate a clutch to disengage drive to the compressor or to otherwise switch the compressor off. For example, if the compressor is driven by a hydraulic or electric motor, the idle pressure control signal could be used to stop the motor.

As explained above, this disclosure may be applied to any vehicle having a pneumatic system for supplying consumers (i.e., on-board or external equipment) with pneumatic power. The vehicle may be an agricultural vehicle, such as a tractor, or other type of commercial vehicle.

By way of example, the one or more consumers may comprise one or more selected from the following list: rear service brake; front service brake; park brake; trailer brake; tire pressure control system; cab air supply; dust discharge system.

These are all types of equipment using pneumatic power for different purposes. The vehicle may comprise a vehicle, or a combination of a towing vehicle and a towed implement.

The multi-circuit protection valve system for example may comprise multiple circuits, e.g. four circuits. Different circuits may operate at different pressures and may be associated with their own reservoirs. For example, the rear service brake, front service brake, park/trailer brake may each be supplied by a separate circuit. The fourth circuit may then supply the secondary consumers.

Within the scope of this application it should be understood that the various aspects, embodiments, examples and alternatives set out herein, and individual features thereof may be taken independently or in any possible and compatible combination. Where features are described with reference to a single aspect or embodiment, it should be understood that such features are applicable to all aspects and embodiments unless otherwise stated or where such features are incompatible.

Variations to the disclosed embodiments can be understood and effected by those skilled in the art in practicing the subject matter of this disclosure, from a study of the drawings, the disclosure and the appended claims. In the claims, the word "comprising" does not exclude other elements or steps, and the indefinite article "a" or "an" does not exclude a plurality.

The mere fact that certain measures are recited in mutually different dependent claims does not indicate that a combination of these measures cannot be used to advantage.

Any reference signs in the claims should not be construed as limiting the scope.

All references cited herein are incorporated herein in their entireties. If there is a conflict between definitions herein and in an incorporated reference, the definition herein shall control.

## Claims

1. A pneumatic system, comprising:
a compressor (10);
a selection valve (220);
a first electrically operated air dryer (EOD) (200) and a second EOD (210), each EOD having an input (201, 211) fluidly couplable to the compressor through the selection valve (220) and an output (208, 218) configured to be fluidly connected to at least one consumer;
each EOD (200, 210) comprising:
a dryer unit (202, 212);
a discharge valve (203, 213) for selectively coupling the EOD input (201, 211) to atmosphere; and
a governor valve (205, 215) having an output port (205a, 215a) fluidly connected to a control pilot port (203a, 213a) of the discharge valve (203, 213), the governor valve being selectively operable in an EOD inlet venting configuration to fluidly connect the output port (205a, 215a) to the EOD output (208, 218) so as to actuate the discharge valve to fluidly connect the EOD input (201, 211) to atmosphere;
wherein the selection valve (220) is a pneumatically controlled valve having a pilot port (220a) for receiving a control pressure signal and is operative to connect either the first EOD (200, 210) or the second EOD (200, 210) to the compressor (10), the selection valve being biased to connect one of the first and second EODs to the compressor and being movable against the bias in response to a control pressure signal at the selection valve pilot port (220a) to connect the other of the first and second EODs to the compressor, and wherein the control pressure signal is derived from the fluid pressure at the output port (205a, 215a) of the governor valve (205, 215) said one of the first and second EODs when the governor valve (205, 215) is operative in said EOD inlet venting configuration.

2. The pneumatic system of claim 1, wherein the output port (205a, 215a) of the governor valve (205, 215) of said one of the first and second EODs is fluidly connected directly to the selection valve pilot port (220a), the fluid pressure at the output port (205a, 215a) when the governor valve (205, 215a) is operative in said EOD inlet venting configuration comprising the control pressure signal.

3. The pneumatic system of claim 1, wherein the system comprises a further pneumatically piloted valve, the output port (205a, 215a) of the governor valve (205, 215) of said one of the first and second EODs (200, 210) is fluidly connected to a pilot port of the further pneumatically piloted valve, such that when the governor valve (205, 215a) is operative in said EOD inlet venting configuration, the further pneumatically piloted valve is actuated to connect a source of fluid pressure to the selection valve pilot port (220a) to constitute the control pressure signal.

4. The pneumatic system of any one of the preceding claims, wherein each EOD (200, 210)) also has:
a one-way output valve (206, 216) between an output of the dryer unit and the output (208, 218) of the EOD, the one-way output valve configured to allow air to pass only in the first direction from the dryer unit to the EOD output (208, 218); and
a regeneration valve (204, 214) connected in parallel to the one-way output valve between the dryer unit output and the EOD output and selectively operable for bypassing the one-way output valve (206, 216) to allow air to flow in a second direction opposite to the first from the EOD output through the dryer unit.

5. The pneumatic system of any one of the preceding claims, wherein each EOD (200, 210) has (i) a loading mode in which air from the compressor is driven through the EOD to the at least one consumer and (ii) a non-loading mode in which the EOD inlet is fluidly connected to the atmosphere by the discharge valve,
wherein the compressor (10) has an idle mode which is triggered by a pressure to an idle control port (240) of the compressor.

6. The pneumatic system of claim 5, wherein the pneumatic system comprises a pneumatic control valve (250) having an output fluidly connected to the idle control port (240), for placing the compressor (10) into the idle mode when both the first and second EODs are in the non-loading mode.

7. The pneumatic system of claim 6, wherein the pneumatic control valve (250) is a pneumatic logic AND valve having two inlet ports (250a, 250b), each fluidly connected to the output port (205a, 215a) of a governor valve of a respective one of the first and second EODs (200, 210), and an output port (252) fluidly connected to the compressor idle control port (240).

8. The pneumatic system of claim 5, comprising a compressor mode selection valve (260, 270) for selectively providing a system pressure to the idle control port (240) of the compressor, wherein the compressor mode selection valve is electrically actuated by a control unit (70).

9. The pneumatic system of claim 8, wherein the system pressure comprises the pressure at the output port (205a, 215a) of a governor valve of one of the first and second EODs (200, 210).

10. The pneumatic system of claim 8, wherein the system pressure comprises the pressure at the at least one consumer.

11. A vehicle comprising:
the pneumatic system of any one of claims 1 to 10; and
the at least one consumer that is supplied by the pneumatic system.

12. The vehicle of claim 11, wherein the at least one consumer comprises at least one selected from the following list:
rear service brake;
front service brake;
park brake;
trailer brake.
tire pressure control system;
cab air supply;
dust discharge system.

13. The vehicle of claim 11 or claim 12, comprising an agricultural vehicle, or a combination of a towing agricultural vehicle and a towed implement.
